Europäisches Patentamt

European Patent Office

Office européen des brevets

(19)

(11) Veröffentlichungsnummer: **0 190 173**
**B1**

(12) # EUROPÄISCHE PATENTSCHRIFT

(45) Veröffentlichungstag der Patentschrift:
**11.05.88**

(21) Anmeldenummer: **85903212.0**

(22) Anmeldetag: **28.06.85**

(86) Internationale Anmeldenummer:
**PCT/DE 85/00219**

(87) Internationale Veröffentlichungsnummer:
**WO 86/00563 (30.01.86** Gazette 86/3)

(51) Int. Cl.⁴: **B 29 C 45/78**

(54) **VERFAHREN ZUR ÜBERWACHUNG UND/ODER REGELUNG DES SPRITZGIESSENS BEI SPRITZGIESSMASCHINEN.**

(30) Priorität: **11.07.84 DE 3425459**

(43) Veröffentlichungstag der Anmeldung:
**13.08.86 Patentblatt 86/33**

(45) Bekanntmachung des Hinweises auf die Patenterteilung:
**11.05.88 Patentblatt 88/19**

(84) Benannte Vertragsstaaten:
**AT BE CH DE FR GB IT LI NL SE**

(56) Entgegenhaltungen:
**DE - A - 2 358 911**
**DE - B - 2 543 088**
**US - A - 4 354 812**

**Der Plastverarbeiter, Vol. 26, August 1975, G. Menges:**
**"Erzielen konstanter Temperaturverhältnisse beim**
**Spritzgiessen", pages 429-434**
**Kunststoffe, Vol. 65, August 1975, D. Rheinfeld:**
**"Anwendung von Prozessregel-und-Steuergeräten bei**
**der Spritzgiess-Verarbeitung", pages 448-455**
**Kunststoffberater, Vol. 23, September 1978, W.**
**Auerdiss: "Steur-und Regelsysteme an**
**Spritzgiessmaschinen", pages 475-478**
**Der Plastverarbeiter, Vol. 26, July 1975, G. Hartl g:**
**"Wärmeleitpaste Thermo 2000", pages 373,374**

(73) Patentinhaber: **ROBERT BOSCH GMBH, Postfach 50,**
**D-7000 Stuttgart 1 (DE)**

(72) Erfinder: **BLERSCH, Eberhard, Waldmeisterweg 8,**
**D-7000 Stuttgart 1 (DE)**
Erfinder: **BURR, August, Willy-Schenk-Strasse 43,**
**D-7070 Schwäbisch Gmünd (DE)**
Erfinder: **HOFMANN, Klaus, Hausweinberg 100,**
**D-7050 Waiblingen- Beinstein (DE)**

EP 0 190 173 B1

## Beschreibung

Die Erfindung geht aus von einem Verfahren nach der Gattung des Hauptanspruchs (US-A-4 354 812). In der DE-A-2 358 911 ist eine Regeleinrichtung für Spritzgiessmaschinen offenbart, bei welcher der Messwertaufnehmer direkt an der Formnestoberfläche sitzt und mit der Spritzgiessmasse in Berührung kommt. Das führt zum einen dazu, dass hier lediglich eine Messung einer quasi Masse- bzw. Kontakttemperatur möglich ist, für die Werkzeugtemperatur muss ein extra Fühler eingebaut werden. Zum anderen müssen derartige Messwertaufnehmer aufgrund der hohen Drücke im Formnest und der extremen mechanischen Belastungen sehr robust gebaut werden, was den Nachteil hat, dass der Fühler relativ unempfindlich ist und bezüglich der Messgenauigkeit zu wünschen übrig lässt, da er aufgrund der Bauweise eine relativ hohe Zeitkonstante aufweist, was zu einer geringeren Ansprechempfindlichkeit führt, so dass lediglich eine sehr träge Regelung mit Hilfe derartiger Messwertaufnehmer möglich ist. Aus den Dokumenten DE-B-2 543 088; US-A-4 354 812; «Der Plastverarbeiter» Band 26, August 1975, Seiten 429 bis 434 und «Kunststoffe», Band 65, August 1975, Seiten 448 - 455 sind Verfahren und Vorrichtungen zum Regeln von Spritzgiessmaschinen bekannt, bei denen die Werkzeugtemperatur gemessen wird. Um auch die Temperatur der Spritzgiessmasse messen zu können ist es notwendig, einen weiteren Thermofühler in einem Düsenzwischenstück vor der Schneckenspitze einzusetzen. Ein derartiger Fühler ist, vor allem bei faserverstärkten Kunststoffen, einem starken Verschleiss ausgesetzt. Ausserdem treten Wärmeleitfehler auf, die den tatsächlichen Wert der Massetemperatur verfälschen. Darüber hinaus sind die Kosten verhältnismässig hoch.

Das erfindungsgemässe Verfahren mit den kennzeichnenden Merkmalen des Hauptanspruchs hat demgegenüber den Vorteil, dass man mit einem einzigen Thermofühler ausser der Werkzeugtemperatur auch gleichzeitig die Konstanz der Massetemperatur und/oder bei Mehrfachformen die Füllung der einzelnen Formnester überwachen und/oder regeln kann, wie unten noch gezeigt werden wird. Ausserdem können bei Mehrfachformen die einzelnen Formnester auf ihre vollständige Füllung hin überwacht werden, wodurch gleichzeitig eine Art Werkzeugsicherung vorhanden ist. Eine Messung der Massetemperatur vor der Schneckenspitze kann entfallen, ausserdem ist der Thermofühler, da er nicht direkt mit der Masse in Berührung kommt, keinem grossen Verschleiss ausgesetzt. Die Ansprechempfindlichkeit ist sehr gross, da Thermofühler nur eine geringe Masse aufweisen. Diese hohe Ansprechempfindlichkeit ermöglicht überhaupt erst die Messung zyklisch auftretender Temperatursprünge in der erforderlichen Genauigkeit.

Durch die in den Unteransprüchen aufgeführten Massnahmen sind vorteilhafte Weiterbildungen und Verbesserungen des im Hauptanspruch angegebenen Verfahrens möglich. Besonders vorteilhaft ist es, wenn bei Überschreitung vorgegebener, maximal zulässiger Abweichungen ein Signal zur Steuerung einer Qualitätsweiche und/oder ein Lichtsignal bzw. elektrisches Signal zum Aussortieren von Teilen betätigt und/oder die Maschine abgeschaltet wird.

Ein Ausführungsbeispiel der Erfindung ist in der Zeichnung dargestellt und in der nachfolgenden Beschreibung näher erläutert. Es zeigen

Fig. 1 den Einbau eines Thermofühlers in ein Spritzgiesswerkzeug und

Fig. 2 in einer grafischen Darstellung den Verlauf der Werkzeugtemperatur in Abhängigkeit von der Zeit über mehrere Spritzzyklen.

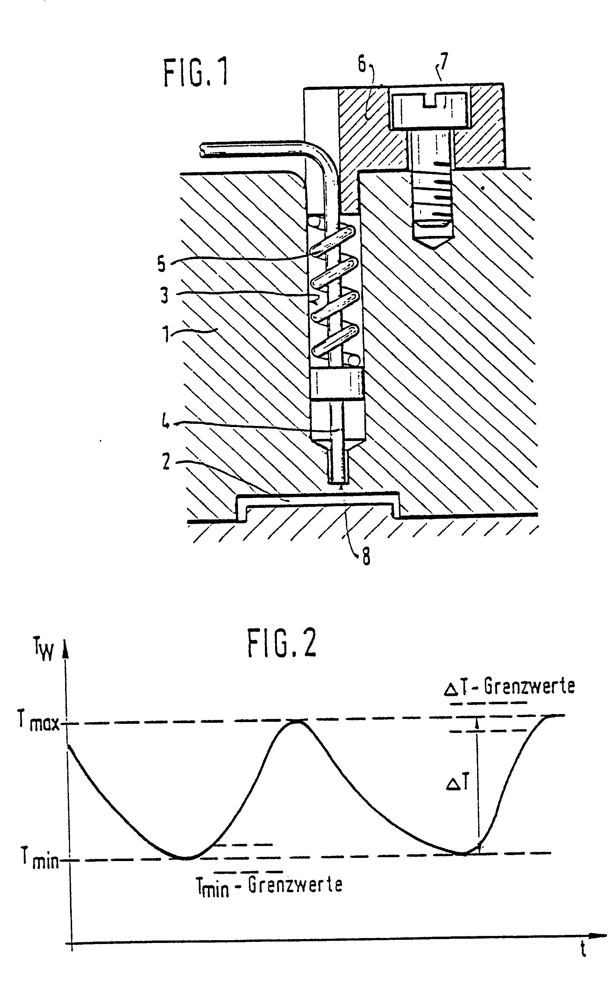

In Fig. 1 ist ein Teil des Werkzeugs 1 mit einem Formnest 2 gezeigt. Das Werkzeug 1 weist eine Bohrung 3 auf, die 1 bis 1,5 mm von der Oberfläche des Formnestes 2 entfernt endet und deren letzter Teil einen solchen Durchmesser aufweist, dass sie gerade den Thermofühler 4 zentriert. Der relativ geringe Abstand von der Formnestoberfläche zum Thermofühler ermöglicht einen guten Wärmeübergang und garantiert hohe Messempfindlichkeit des Thermofühlers 4. Einem guten Kontakt zwischen dem Thermofühler 4 und dem Ende der Bohrung 3 dient auch die Tatsache, dass die beiden Kontaktflächen 8 von Thermofühler 4 und Werkzeug 1 durch eine vorgespannte Feder 5 aufeinander gepresst werden, wobei die Kontaktfläche von Werkzeug 1 plan ausgeführt ist. Dies wird durch ein Klemmstück 6 erreicht, das mit einer Schraube 7 in dem Werkzeug 1 verschraubt ist. Das Werkzeug 1 selber, das in üblicher Weise mittels Wasser und/oder Öl, das durch entsprechende Kanäle fliesst, temperiert wird, ist Teil einer üblichen Spritzgiessmaschine, wobei diese Spritzgiessmaschine aber in der Nähe der Spritzdüse kein Thermoelement aufweist, wie dies von manchen Anlagen her bekannt ist.

Verbindet man nun den Thermofühler 4 mit einem Temperatur/Zeitschreiber, so bekommt man einen Kurvenverlauf, wie er in Fig. 2 dargestellt ist. Die Kurve bewegt sich zwischen einer minimalen und einer maximalen Temperatur, die im Falle eines ordnungsgemäss ablaufenden Verfahrens praktisch konstant bleiben. Nun kann aber entweder die Temperierung des Werkzeugs ausfallen oder es kann sich, aus welchen Gründen auch immer, die Temperatur der Schmelze nach oben oder nach unten verändern, was dazu führen kann, dass die in diesem Verfahrensstadium hergestellten Spritzgiessteile keine optimale Qualität mehr aufweisen. Um diese Abweichungen in den Griff zu bekommen, werden sowohl für die obere Werkzeugtemperatur $T_{max}$ und für die untere Werkzeugtemperatur $T_{min}$ empirisch ermittelte Grenzwerte der Abweichungen nach oben und nach unten festgelegt, bei deren Überschreiten z.B. eine Qualitätsweiche betätigt und dadurch vollautomatisch eine Aussortierung von Teilen, die ausserhalb der Grenzwertvorgaben gefertigt werden, erfolgt und/oder ein Signal abgibt und/oder die Maschine abgeschaltet wird.

Um nun einen der obengenannten Fehler festzustellen, ist es lediglich notwendig, die $T_{min}$-Werte und die $\Delta T$-Werte, dass heisst, die Werte $T_{max} - T_{min}$, zu überwachen. Es hat sich nämlich folgendes herausgestellt: Fällt die Temperierung des Werkzeuges aus, so fällt die Temperatur $T_{min}$ sehr schnell um einige Grad, während sich $\Delta T$ nur unwesentlich ändert, was natürlich bedeutet, dass auch die Temperatur

$T_{max}$ nahezu um den gleichen Betrag fällt. Ändert sich dagegen die Temperatur der Schmelze, so schlägt eine solche Änderung praktisch nur auf die Temperaturdifferenz $\Delta T$ durch, während sich $T_{min}$ praktisch kaum ändert. Dabei muss allerdings betont werden, dass $T_{min}$ in einer Auflösung von ganzen Grad gemessen wird, während die Temperaturdifferenz $\Delta T$ in einer Auflösung von zehntel Grad gemessen werden muss. Wenn man dies berücksichtigt, sind diese Werte sehr gut reproduzierbar und führen zu einer einfachen und sicheren Überwachung des Spritzgiessvorganges bzw. können als Regelgrösse benutzt werden.

Im folgenden soll an einem speziellen Beispiel gezeigt werden, in welcher Grössenordnung sich die Temperaturen bzw. Temperaturunterschiede bewegen. In diesem Beispiel wurden Spritzgiessteile aus Polyamid 6.6 hergestellt. Bei einer Massetemperatur von 270°C ergaben sich Werkzeugtemperaturen $T_{min}$ von 62,4°C und $T_{max}$ von 74,5°C. $\Delta T$, die Differenz dieser beiden genannten Temperaturen, beträgt also 12,1°C. Dann wurde die Massetemperatur auf 290°C erhöht. Danach ergaben sich Werkzeugtemperaturen von $T_{min}$ 63,1°C und $T_{max}$ von 76,3°C. $\Delta T$ beträgt also in diesem Falle 13,2°C, also eine deutliche Erhöhung von $\Delta T$, wenn man bedenkt, dass diese Grösse in zehntel Grad aufgelöst wird. Die Zykluszeit betrug 34 Sekunden, der Abstand des Fühlers von der Werkzeugoberfläche war 1,5 mm.

Die Höhe des Temperatursprungs $\Delta T$ ist von mehreren Variablen abhängig, so zum einen von der Positionierung und der Bauweise des Thermofühlers, zum anderen natürlich von der Massetemperatur, wie oben gezeigt, schliesslich auch von der Werkzeugtemperatur und Werkstoff, aber auch in geringem Masse von der Wanddicke des spritzgegossenen Teiles an der Messstelle und von der Grösse desselben. Es ist daher erforderlich, die Grenzwerte für jedes Werkzeug und für die jeweiligen Bedingungen, unter denen dieses Werkzeug betrieben wird, empirisch festzulegen. Ist dies jedoch einmal erfolgt, so stellt das erfindungsgemässe Verfahren eine sehr einfache Methode dar, die für das Spritzgiessen wichtigen Parameter Werkzeugtemperatur und Massetemperatur, die nach diesem Verfahren indirekt erfasst wird, mit dem gleichen Fühler zu überwachen und/oder zu regeln.

**Patentansprüche**

1. Verfahren zur Überwachung und/oder Regelung des Spritzgiessens bei Spritzgiessmaschinen durch Messen der Temperatur im Spritzwerkzeug, wobei ein Thermofühler (4) in einer Bohrung (3) im Werkzeug (1) so dicht an die Formnestoberfläche herangeführt wird, dass die sich aus den Spritzzyklen ergebenden Temperatursprünge durch den Thermofühler erfasst und eine minimale Temperatur $T_{min}$ des Werkzeugs auf maximal zulässige Abweichungen hin überwacht und/oder zur Regelung der Werkzeugtemperatur ausgewertet wird, dadurch gekennzeichnet, dass die Differenz $\Delta T$ zwischen der unteren Werkzeugtemperatur $T_{min}$ und einer von der Temperatur der eingespritzten Giessmasse bestimmten, oberen Werkzeugtemperatur $T_{max}$ zur Überwachung und/oder Regelung der Massetemperatur ausgewertet wird.

2. Verfahren nach Anspruch 1, dadurch gekennzeichnet, dass bei Überschreitung vorgegebener, maximal zulässiger Abweichungen von $T_{min}$ oder $T_{max}$ ein Signal zur Steuerung einer Qualitätsweiche und/oder ein Lichtsignal bzw. elektrisches Signal zum Aussortieren von Teilen betätigt und/oder die Maschine abgestellt wird.

3. Verfahren nach einem der Ansprüche 1 oder 2, dadurch gekennzeichnet, dass bei Mehrfachformen jedes Formnest mit einem Thermofühler ausgestattet wird, und dass über die Temperaturdifferenz $\Delta T = T_{max} - T_{min}$ die Füllung der Formnester überwacht wird.

**Claims**

1. Process for monitoring and/or regulating injection moulding in injection moulding machines by measurement of the temperature in the injection mould, a temperature sensor (4) in a bore (3) in the mould (1) being taken so closely up to the mould cavity surface that the sudden changes in temperature produced by the injection cycles are recorded by the temperature sensor and a minimum temperature $t_{min}$ of the mould is monitored for a maximally admissible deviations and/or is evaluated for regulating the mould temperature, characterised in that the difference $\Delta t$ between the lower mould temperature $t_{min}$ and an upper mould temperature $t_{max}$, determined by the temperature of the injected moulding compound, is evaluated for monitoring and/or regulating the melt temperature.

2. Process according to claim 1, characterised in that when predetermined, maximally admissible deviations of $t_{min}$ or $t_{max}$ are exceeded a signal for controlling a quality point and/or a light signal or electric signal for the sorting-out of articles is actuated and/or the machine is disconnected.

3. Process according to one of claims 1 or 2, characterised in that, in the case of multi-cavity moulds, each mould cavity is equipped with a temperature sensor, and in that the filling of the mould cavities is monitored via the temperature difference $\Delta T = t_{max} - T_{min}$.

**Revendications**

1. Procédé pour la surveillance et/ou la régulation du moulage par injection dans des presses d'injection, par la mesure de la température de l'outillage d'injection, dans lequel un capteur de température (4) dans un alésage (3) pratiqué dans l'outillage (1) si près de la surface du moule que les écarts de température résultant des cycles d'injection et saisis par le capteur de température, et une température minimale $T_{min}$ de l'outillage par rapport aux écarts maxima admissibles sont exploités pour la surveillance et/ou régulation de la température de l'outillage, caractérisé en ce que la différence $\Delta T$ entre la

température inférieure de l'outillage $T_{min}$ et une température supérieure de l'outillage $T_{max}$, déterminée par la température de la masse injectée, est exploitée pour la surveillance et/ou la régulation de la température de la masse.

2. Procédé selon la revendication 1, caractérisé en ce que le dépassement d'écarts maxima admissibles prédéterminés des températures $T_{min}$ ou $T_{max}$ actionne un signal pour régler une faiblesse de qualité et/ou un signal lumineux ou un signal électrique pour faire le triage de pièces et/ou arrêter la machine.

3. Procédé selon l'une des revendications 1 ou 2, caractérisé en ce que, dans le cas de moulage en grapes, chaque moule est muni d'un capteur de température, et que le remplissage du moule est surveillé par l'intermédiaire de la différence de température $\Delta T = T_{max} - T_{min}$.

## FIG.1

## FIG.2

$\Delta T$ - Grenzwerte

$T_{max}$

$\Delta T$

$T_{min}$

$T_{min}$ - Grenzwerte

$T_W$

t